# EUROPÄISCHE PATENTANMELDUNG

(11) **EP 1 906 653 A2**
(43) Veröffentlichungstag der Anmeldung: **02.04.2008**
(21) Anmeldenummer: 07014923.2
(22) Anmeldetag: 30.07.2007
(51) Int. Cl.: H04N 5/222

(54) **Vorrichtung zur Aufzeichnung von Bilddaten und Metadaten**

(30) Priorität: 29.09.2006 DE 102006046280
(71) Anmelder: ARNOLD & RICHTER CINE TECHNIK GMBH & CO. BETRIEBS KG, 80799 München (DE)
(72) Erfinder: Jacumet, Klaus, 80995 München (DE); Kandleinsberger, Robert, 80801 München (DE); Koppetz, Michael, 81669 München (DE)
(74) Vertreter: Manitz, Finsterwald & Partner GbR

(57) **Zusammenfassung**

Die Erfindung betrifft eine Vorrichtung zur Aufzeichnung von Bilddaten und Metadaten, welche Informationen über die Bilddaten - wie Aufzeichnungsparameter - enthalten, mit einer digitalen Filmkamera, welche wenigstens einen Bildsensor zur Erzeugung der Bilddaten umfasst, und mit Metadaten-Bilderzeugungsmittel, durch welche die Metadaten in Form von vom menschlichen Auge erfassbarer Bildinformation aufzeichenbar sind, so dass die Bilddaten und die Metadaten als eine gemeinsame Bildinformation erzeugbar sind, wobei die Metadaten-Bilderzeugungsmittel Anzeigemittel zur optischen Darstellung von Metadaten, insbesondere ein Display, und/oder Datenverarbeitungsmittel zur elektronischen Erzeugung der Metadaten innerhalb der Bilddaten, insbesondere einen Controller, umfassen.

## Beschreibung

Die vorliegende Erfindung betrifft eine Vorrichtung zur Aufzeichnung von Bilddaten und Metadaten, welche Informationen über die Bilddaten - wie Aufzeichnungsparameter - enthalten, mit einer digitalen Filmkamera, d.h. einer digitalen Laufbildkamera, welche wenigstens einen Bildsensor zur Erzeugung der Bilddaten umfasst, und mit Metadaten-Bilderzeugungsmitteln, durch welche die Metadaten in Form von vom menschlichen Auge erfassbarer Bildinformation aufzeichenbar sind, so dass die Bilddaten und die Metadaten als eine gemeinsame digitale Bildinformation erzeugbar sind. Die Erfindung betrifft weiterhin ein entsprechendes Verfahren.

Bei Dreharbeiten werden üblicherweise Klappen, sogenannte Synchronklappen, verwendet, um beim Schnitt die Synchronisation von Bild und Ton zu ermöglichen. Derartige Klappen umfassen in der Regel jeweils eine beschriftbare Tafel und einen außerhalb der Tafel angeordneten beweglichen Schenkel, welcher über ein Gelenk mit der Tafel verbunden ist und zur Erzeugung eines Klappengeräusches gegen die Tafel geschlagen werden kann.

Bei einer klassischen Synchronklappe aus Holz wird die Tafel, die oft eine schwarze Oberfläche aufweist, mit Kreide mit Informationen über den Film wie Filmtitel, Name des Regisseurs, Name des Kameramanns, Nummer der Einstellung (Takenummer), Szenenummer, Klappennummer und Datum der Aufnahme beschrieben. Die auf den Klappen dargestellten Informationen werden als Metadaten bezeichnet, da sie Informationen über die jeweilige Aufnahme enthalten. Alternativ zu einer Beschriftung mit Kreide ist es auch bekannt, die Informationen mit Klebeband oder per Klettverschluss an der Tafel anzubringen.

Daneben sind auch Klappen aus Plexiglas bekannt, die im Gegensatz zu den vorstehend beschriebenen Klappen lichtdurchlässig ausgebildet sind, so dass insbesondere bei Gegenlicht die Klappe beim Abfilmen nicht extra beleuchtet und/oder eine Blendeneinstellung der Filmkamera verändert werden muss.

Zu Beginn einer Aufnahme wird eine beschriftete Synchronklappe in das Sichtfeld der Filmkamera gehalten und von der Filmkamera abgefilmt, so dass auf dem ersten Bild oder den ersten Bildern einer Aufnahme die Synchronklappe und somit die darauf befindlichen Metadaten zu sehen sind. Die Metadaten liegen dann - ebenso wie die eigentlichen Bilddaten, die die abgefilmte Umgebung und/oder Handlung wiedergeben - in Form von vom menschlichen Auge erfassbarer Bildinformation vor, also beispielsweise als Folge von Buchstaben, Ziffern und/oder Symbolen. Unter Bildinformation ist dabei insbesondere diejenige Information zu verstehen, welche die Bildpunkte eines Bildes (z.B. bildpunktbezogene Farbwerte und Helligkeitswerte) oder daraus mittels Bildverarbeitung erzeugte Bildformate repräsentiert.

Weiterhin ist es bekannt, bei Fotokameras und Videokameras bestimmte Metadaten, beispielsweise das Datum und die Uhrzeit, getrennt von den eigentlichen Bilddaten zu speichern und/oder zu verwalten und lediglich bei Bedarf in die aufgenommenen Bilder einzublenden. Hierbei handelt es sich jedoch nicht um eine gattungsgemäße Vorrichtung, da die Bild- und Metadaten nicht als gemeinsame Bildinformation im Sinne dieser Anmeldung erzeugt werden.

Der Erfindung liegt die Aufgabe zugrunde, eine einfache und/oder komfortable Möglichkeit anzugeben, Metadaten in Form von Bildinformation aufzuzeichnen.

Diese Aufgabe wird durch eine Vorrichtung mit den Merkmalen des Anspruchs 1 gelöst, und insbesondere dadurch, dass die Metadaten-Bilderzeugungsmittel Anzeigemittel zur optischen Darstellung von Metadaten, insbesondere ein Display, umfassen.

Für ein Verfahren wird diese Aufgabe mit den Merkmalen des Anspruchs 17 und insbesondere dadurch gelöst, dass die Metadaten auf Anzeigemitteln, insbesondere einem Display, optisch dargestellt werden.

Erfindungsgemäß können die Metadaten auf einer optischen Datenanzeige dargestellt werden. Hierdurch kann gewährleistet werden, dass die Metadaten insbesondere im Vergleich zu handbeschriebenen Klappen stets gut lesbar sind. Außerdem wird hierdurch ermöglicht bzw. erleichtert, die Metadaten beim Schnitt automatisch zu lesen. Darüber hinaus können die Metadaten schnell und einfach geändert werden. Insbesondere können auch zeitlich veränderliche Metadaten, beispielsweise die Uhrzeit, jederzeit exakt dargestellt werden.

Bevorzugt ist die relative Lage und/oder Orientierung der Anzeigemittel zu dem Bildsensor festgelegt, insbesondere fixiert, so dass ermöglicht wird, die Metadaten aufnahmeübergreifend auf dieselben Bereiche des Bildsensors und/oder mit derselben Größe einzuspiegeln, wodurch ein späteres, insbesondere automatisch erfolgendes Lesen der Metadaten weiter erleichtert werden kann.

Nach einer Ausgestaltung der Erfindung sind Spiegelmittel zur Einspiegelung der auf den Anzeigemitteln dargestellten Metadaten auf den Bildsensor vorgesehen. Aufgrund der Möglichkeit, auf Anzeigemitteln optisch dargestellte Metadaten direkt in die Filmkamera einzuspiegeln, ist es nicht länger notwendig, eine Synchronklappe in das Sichtfeld der Filmkamera zu halten. Darüber hinaus sind die Metadaten zu jedem beliebigen Zeitpunkt instantan, insbesondere auf Knopfdruck, auf den Bildsensor einspiegelbar.

Nach einer anderen Ausgestaltung der Erfindung sind zur Einspiegelung die Metadaten auf eine zwischen einem der digitalen Kamera zugeordneten Aufnahmeobjektiv und dem Bildsensor angeordnete Zwischenbildebene, insbesondere eine Mattscheibe, abbildbar. Dies ist insbesondere dann von Vorteil, wenn bereits eine Zwischenbildebene vorhanden ist, wie es insbesondere bei Verwendung einer Videokamera mit einem Bildsensor der Fall sein kann, dessen Format nicht genau dem Format des Bildsensors einer Vollformat-Filmkamera für Kino- und/oder Fernsehproduktionen entspricht (35mm Vollformat-Bildsensor). Eine derartige Videokamera besitzt aufgrund des kleineren Bildsensors nämlich eine gegenüber einer Vollformat-Filmkamera geringere Brennweite und eine größere Schärfentiefe. Um trotzdem die geringere Schärfentiefe einer Vollformat-Filmkamera und die damit verbundenen gestalterischen Effekte zu erreichen, kann vor dem Kameraobjektiv der Videokamera eine Mattscheibe angeordnet sein, vor welcher wiederum ein Filmkameraobjektiv für eine Vollformat-Filmkamera angeordnet ist, welches ein Bild auf die Mattscheibe projiziert, welches Bild dann von der Videokamera abgefilmt werden kann. Damit beim Abfilmen die Struktur der Mattscheibe nicht sichtbar wird, kann die Mattscheibe insbesondere rotierend in der Mattscheibenebene bewegt werden.

Bevorzugt ist zur Abbildung der Metadaten auf die Zwischenbildebene eine Abbildungsoptik vorgesehen, deren optische Achse gegenüber der optischen Achse der Filmkamera unter einem von Null und/oder 90° verschiedenen Winkel geneigt ist. Es sind unterschiedliche optische Pfade möglich. Insbesondere können die Metadaten auf die Vorder- und/oder Rückseite der Zwischenbildebene abbildbar sein. Sofern die Metadaten auf die Vorderseite der Zwischenbildebene, d.h. auf die von dem Bildsensor abgewandte Seite, abgebildet werden, ist es bevorzugt, wenn Mittel zur Bildspiegelung vorgesehen sind, um ein spiegelverkehrtes Einspiegeln der Metadaten auf den Bildsensor zu vermeiden.

Besonders bevorzugt ist es, wenn die aufgrund der zueinander geneigten optischen Achsen auftretende Verzerrung der Geometrie der auf die Zwischenbildebene abgebildeten Metadaten gegenüber der Geometrie der auf den Anzeigemitteln dargestellten Metadaten kompensierbar ist, beispielsweise durch eine entsprechende, die Verzerrung ausgleichende Verkippung der Abbildungsoptik. Bevorzugt ist die Verzerrung jedoch an den Anzeigemitteln kompensierbar, insbesondere durch verzerrte Darstellung der Metadaten auf den Anzeigemitteln.

Nach einer weiteren Ausgestaltung der Erfindung ist zur Einspiegelung der Metadaten ein auf der optischen Achse der Filmkamera angeordneter Strahlteiler vorgesehen. Der Strahlteiler kann als ein teildurchlässiger, insbesondere halbdurchlässiger, Spiegel ausgebildet sein. Bei einer digitalen Spiegelreflexfilmkamera ist der Strahlteiler insbesondere eine rotierende Spiegelblende, so dass die Anzahl an zusätzlichen Bauteilen gegenüber einer herkömmlichen digitalen Filmkamera gering gehalten werden kann. Der Strahlteiler ist bevorzugt zwischen einem der Filmkamera zugeordneten Kameraobjektiv und dem Bildsensor vorgesehen.

Nach einer weiteren Ausgestaltung der Erfindung sind die Anzeigemittel an ein Gehäuse für eine Zwischenbildebene, insbesondere für eine Mattscheibe, koppelbar. Dies ermöglicht, dass das Gehäuse einer herkömmlichen Filmkamera nicht verändert und/oder die Filmkamera nicht an die Anzeigemittel und/oder Spiegelmittel angepasst werden muss. Insbesondere wenn keine Zwischenbildebene verwendet wird, können die Anzeigemittel aber auch an ein Gehäuse der Filmkamera koppelbar sein. Ein besonders kompakter Aufbau ergibt sich, wenn die Anzeigemittel innerhalb des Gehäuses der Filmkamera angeordnet sind.

Nach einer weiteren Ausgestaltung der Erfindung, die auch separat beansprucht wird, umfassen die Metadaten-Bilderzeugungsmittel Datenverarbeitungsmittel zur elektronischen Erzeugung der Metadaten innerhalb der Bilddaten, insbesondere einen Controller, wobei sich dieselben Vorteile, wie sie vorstehend zu der erfindungsgemäßen Vorrichtung mit den Anzeigemitteln beschrieben sind, ergeben. Separate optische Anzeigemittel sind dann jedoch nicht zwingend erforderlich.

Bevorzugt weist der Bildsensor Sensorelemente auf, deren Ausgangssignale durch die Datenverarbeitungsmittel voreinstellbar sind. Hierdurch kann ein künstliches Bild erzeugt werden, welches die Metadaten in Form von Bildinformation enthält. Insbesondere braucht kein eigentliches Bild aufgenommen zu werden. Ein der Filmkamera zugeordnetes Kamera- oder Aufnahmeobjektiv kann abgedeckt sein. Die Ausgangssignale der Sensorelemente können besonders helle, insbesondere weiße, oder besonders dunkle, insbesondere schwarze, Bildpunkte repräsentieren. Wird der Bildsensor ausgelesen, werden die Metadaten in den Datenstrom der Filmkamera übernommen.

Nach einer weiteren Ausgestaltung der Erfindung sind die von den Datenverarbeitungsmitteln erzeugten Metadaten nach Auslesen aus dem Bildsensor bei der Bildverarbeitung in Bildinformation umwandelbar. Insbesondere ist es möglich, dass die Metadaten an verschiedenen Orten des Bildverarbeitungspfades in Bildinformation umgewandelt werden. Die Metadaten können dabei die eigentlichen Bilddaten ersetzen oder diesen überlagert werden.

Bevorzugt ist eine Eingabeeinrichtung zur Eingabe von Metadaten, z.B. des Filmtitels, durch einen Benutzer vorgesehen. Bei der Eingabeeinrichtung kann es sich beispielsweise um einen PC, einen Laptop, einen PDA oder eine eigenständige Hardware handeln. Die Eingabeeinrichtung ist bevorzugt mit den Anzeigemitteln und/oder den Datenverarbeitungsmitteln verbunden. Eingabeeinrichtung und Anzeigemittel können in einem gemeinsamen Gehäuse angeordnet sein. Die Übertragung der Metadaten von der Eingabeeinrichtung an die Anzeigemittel und/oder die Datenverarbeitungsmittel kann über Kabel oder drahtlos, z.B. per Funk, IR-Schnittstelle oder Bluetooth, erfolgen.

Nach einer weiteren Ausgestaltung der Erfindung umfassen die Metadaten von der Filmkamera selbst erzeugte Aufnahmeparameter und/oder vom Benutzer eingegebene Aufnahmeparameter. Hierbei kann es sich beispielsweise um die eingestellte Empfindlichkeit des Bildsensors, die Bildfrequenz der Aufnahme, das Ausgangsformat, Bildverarbeitungsparameter und/oder Linsenparameter handeln.

Bevorzugt sind eingegebene und/oder von der Filmkamera erzeugte Daten an die Metadaten-Bilderzeugungsmittel übermittelbar.

Die vorliegende Erfindung betrifft weiterhin eine Vorrichtung zum Lesen von von einer digitalen Filmkamera übermittelten Metadaten, welche Informationen über Bilddaten - wie Aufzeichnungsparameter - enthalten und welche in Form von vom menschlichen Auge erfassbarer Bildinformation aufgezeichnet sind, so dass die Bilddaten und die Metadaten als eine gemeinsame Bildinformation vorliegen, wobei Mittel zur Bildmustererkennung zur automatischen Extraktion der Metadaten aus der Bildinformation vorgesehen sind, insbesondere ein OCR-Leser. Die Erfindung betrifft weiterhin ein entsprechendes Verfahren.

Bevorzugt sind Auswahlmittel zur automatischen Auswahl von Metadaten enthaltenden Bildern aus Bildinformation umfassenden Bildern vorgesehen.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: eine erste Ausführungsform einer erfindungsgemäßen Vorrichtung mit einer Synchronklappe,
- Fig. 2: eine zweite Ausführungsform einer erfindungsgemäßen Vorrichtung mit einem außerhalb der digitalen Filmkamera angeordneten Display,
- Fig. 3: eine dritte Ausführungsform einer erfindungsgemäßen Vorrichtung mit einem innerhalb der digitalen Filmkamera angeordneten Display,
- Fig. 4: eine vierte Ausführungsform einer erfindungsgemäßen Vorrichtung mit einem voreinstellbaren Bildsensor,
- Fig. 5: eine fünfte Ausführungsform einer erfindungsgemäßen Vorrichtung,
- Fig. 6: eine erfindungsgemäße Vorrichtung mit einer Eingabeeinrichtung zur Eingabe von Metadaten durch einen Benutzer, und
- Fig. 7: eine erfindungsgemäße Vorrichtung zum Lesen von von einer digitalen Filmkamera übermittelten Metadaten.

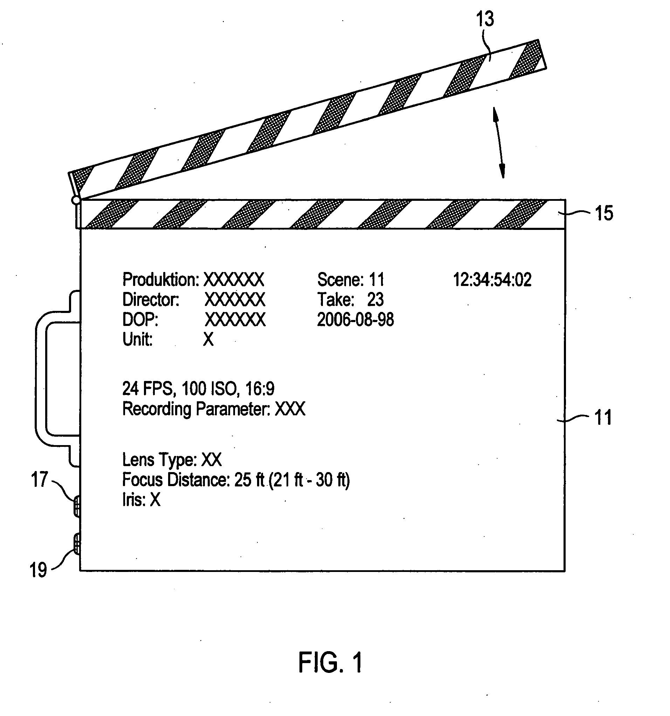

Die in Fig. 1 gezeigte Synchronklappe umfasst ein strombetriebenes Display 11, insbesondere ein TFT-Display, auf dem Metadaten dargestellt sind. Die dargestellten Metadaten umfassen zum Beispiel den Filmtitel, den Namen des Regisseurs und den des Kameramanns, die Nummer der Einstellung (Takenummer), die Szenen- und die Klappennummer, das Datum, die Uhrzeit, oder Aufnahmeparameter, die vom Benutzer eingegeben oder von der Kamera selbst generiert werden, wie die Bildfrequenz der Aufnahme, die Belichtungszeit, die Blendeneinstellung, die Entfernungseinstellung, die Empfindlichkeit des Bildsensors oder den Linsentyp. Zur Verwaltung der Anzeige der Metadaten auf dem TFT-Display 11 ist ein nicht dargestellter Controller vorgesehen. Die Synchronklappe umfasst weiterhin zwei gelenkig miteinander verbundene Schenkel 13, 15, wobei zur Erzeugung eines Klappengeräusches der Schenkel 13 gegen den mit dem TFT-Display 11 verbundenen Schenkel 15 geschlagen wird. Darüber hinaus umfasst die Synchronklappe eine Eingangsbuchse 17 zur Spannungsversorgung des TFT-Displays 11. Daneben ist eine Eingangsbuchse 19 vorgesehen, über welche an einer nicht dargestellten Eingabeeinrichtung eingegebene Metadaten an den Controller der Synchronklappe übermittelbar sind. Die Synchronklappe wird zu Beginn einer Aufnahme in das Sichtfeld einer digitalen Filmkamera gehalten und von dieser abgefilmt.

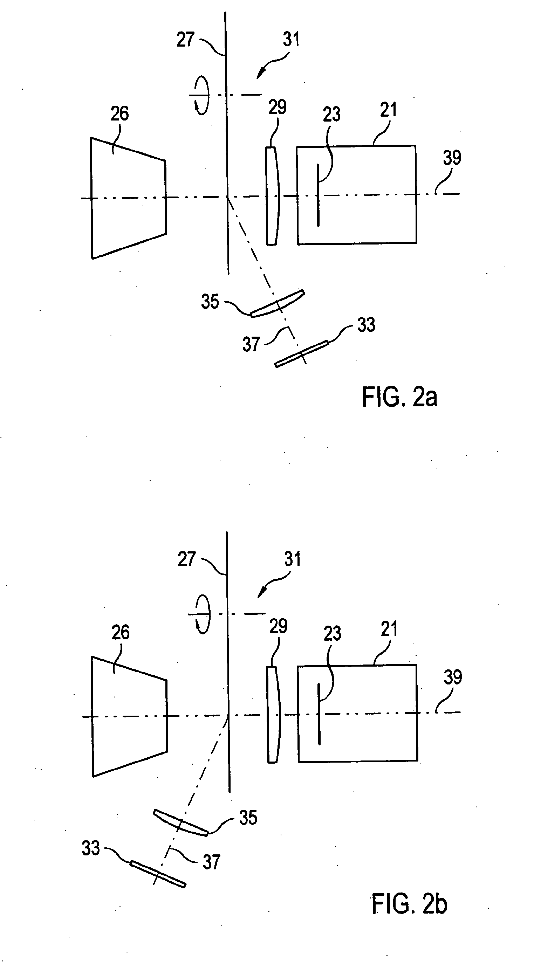

Die in Fig. 2a gezeigte Vorrichtung umfasst eine digitale Videokamera 21 mit einem Bildsensor 23, beispielsweise einem CCD- oder CMOS-Sensor. Darüber hinaus umfasst die Vorrichtung ein Aufnahmeobjektiv 26. Zwischen der Videokamera 21 und dem Aufnahmeobjektiv 26 ist ein Adapter 31 vorgesehen, welcher in einem gemeinsamen Gehäuse sowohl eine rotierende Mattscheibe 27 als auch eine Relaislinse 29 umfasst. Das Aufnahmeobjektiv 26 ist auf den Adapter 31, und der Adapter 31 ist auf die Videokamera 21 aufgesetzt. Ferner ist ein strombetriebenes Display 33 vorgesehen, auf dem Metadaten darstellbar sind.

Das Display 33 und damit die auf dem Display 33 dargestellten Metadaten sind über eine Abbildungsoptik 35 auf die dem Bildsensor 23 zugewandten Rückseite der rotierenden Mattscheibe 27 abbildbar. Die optische Achse 37 der Abbildungsoptik 35 ist um einen zwischen 0 und 90 Grad betragenden Winkel gegenüber der optischen Achse 39 der Videokamera 21 geneigt. Das Display 33 und die Abbildungsoptik 35 sind in einem gemeinsamen Gehäuse angeordnet, welches an den Adapter 31 derart gekoppelt ist, dass die relative Lage und Orientierung des Displays 37 zu dem Bildsensor 23 fixiert ist. Zur Verwaltung und Anzeige der Metadaten auf dem Display 33 ist ein nicht dargestellter Controller vorgesehen.

Die aufgrund der zueinander geneigten optischen Achsen 37, 39 ansonsten auftretende Verzerrung der Geometrie der auf dem Display 33 dargestellten Metadaten wird durch das Display 33 kompensiert. Display 33 und Abbildungsoptik 35 sind bevorzugt besonders kleinbauend ausgebildet. Durch ihren Aufbau ermöglicht die in Fig. 2a gezeigte Vorrichtung, auf dem Display 33 dargestellte Metadaten auf den Bildsensor 23 einzuspiegeln. Hierdurch können Metadaten als Bildinformation aufgezeichnet werden.

Dem Bildsensor 23 nachgeschaltet sind beispielsweise ein Analog/ DigitalWandler, eine Signalverarbeitungseinrichtung und eine digitale Datenspeichereinrichtung oder ein Datenausgang.

Im Gegensatz zu der Vorrichtung gemäß Fig. 2a sind bei der Vorrichtung gemäß Fig. 2b das Display 33 und die Abbildungsoptik 35 derart positioniert, dass die auf dem Display 33 dargestellten Metadaten auf die dem Objektiv 26 zugewandte Vorderseite der rotierenden Mattscheibe 27 abbildbar sind. Die Metadaten werden deshalb spiegelverkehrt auf dem Display 33 dargestellt, um ein spiegelverkehrtes Einspiegeln der Metadaten auf den Bildsensor 22 zu vermeiden. Ansonsten entspricht die Ausbildung der Vorrichtung gemäß Fig. 2b jedoch der Ausbildung der Vorrichtung gemäß Fig. 2a.

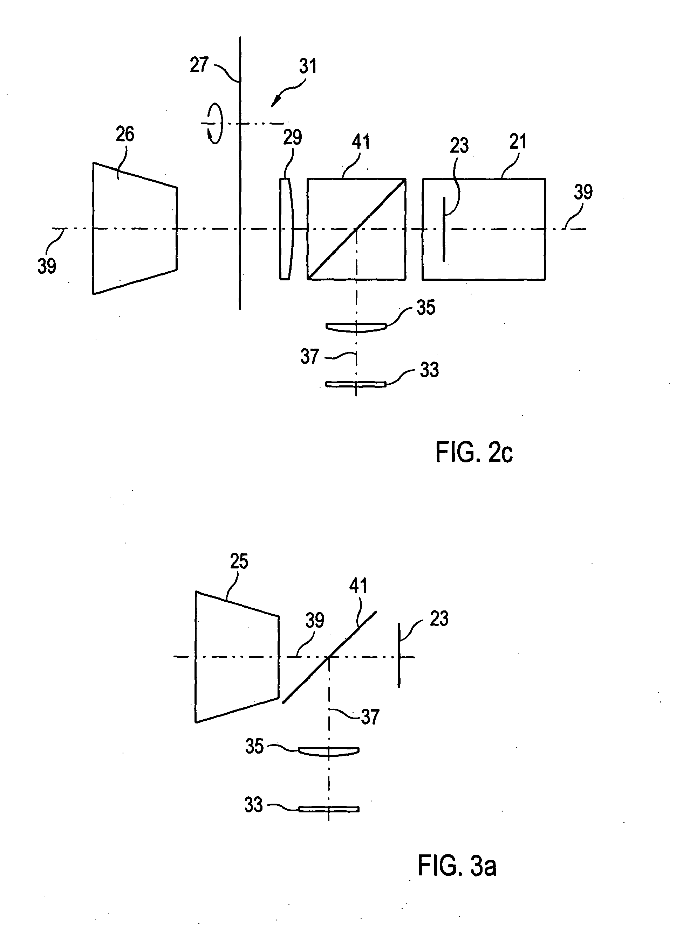

Die Vorrichtung gemäß Fig. 2c umfasst ebenfalls eine digitale Videokamera 21 mit einem Bildsensor 23, ein Aufnahmeobjektiv 26 und einen Adapter 31, welcher eine rotierende Mattscheibe 27 und eine Relaislinse 29 umfasst, wobei das Aufnahmeobjektiv 26 auf den Adapter 31, und der Adapter 31 auf die Videokamera 21 aufgesetzt ist. Zwischen dem Adapter 31 und der Videokamera 21 ist ein Strahlteiler 41, insbesondere ein halbdurchlässiger Spiegel, angeordnet, welcher unter 45° gegen die optische Achse 39 der Videokamera 21 geneigt ist. Darüber hinaus ist ein strombetriebenes Display 33 vorgesehen, auf dem Metadaten darstellbar sind, die über eine Abbildungsoptik 35 und über den halbdurchlässigen Spiegel 41 auf den Bildsensor 23 der Videokamera 21 einspiegelbar sind. Die optische Achse 37 der Abbildungsoptik 35 und die optische Achse 39 der Videokamera 21 schließen einen Winkel von 90° ein. Das Display 33 und die Abbildungsoptik 35 sind in einem gemeinsamen Gehäuse angeordnet, welches an den Adapter 31 derart gekoppelt ist, dass die relative Lage und Orientierung des Displays 37 zu dem Bildsensor 23 fixiert ist.

Fig. 3a zeigt eine digitale Vollformat-Filmkamera für Kino- und/oder Fernsehproduktionen. Die Filmkamera umfasst einen Bildsensor 23 und ein Kameraobjektiv 25, zwischen denen ein Strahlteiler 41, insbesondere ein halbdurchlässiger Spiegel, angeordnet ist, welcher unter 45° gegen die optische Achse 39 der Filmkamera geneigt ist. Weiterhin ist ein strombetriebenes Display 33 vorgesehen, auf dem Metadaten darstellbar sind, die über eine Abbildungsoptik 35 und den halbdurchlässigen Spiegel 41 auf den Bildsensor 23 abgebildet werden. Die optische Achse 37 der Abbildungsoptik 35 steht wiederum senkrecht auf der optischen Achse 39 der Filmkamera. Das Display 33 und die Abbildungsoptik 35 befinden sich in der Ausführungsform gemäß Fig. 3a innerhalb des Gehäuses der Filmkamera. Zur Verwaltung und Anzeige der Metadaten auf dem Display 33 ist ein nicht dargestellter Controller vorgesehen, welcher lediglich für das Display 33 aber auch für die gesamte Filmkamera zuständig sein kann.

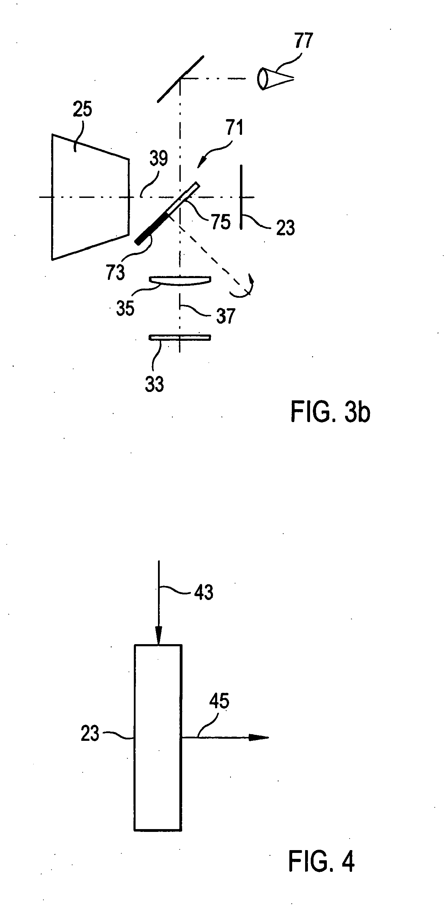

Im Gegensatz zu der Vorrichtung gemäß Fig. 3a umfasst die Vorrichtung gemäß Fig. 3b anstelle eines halbdurchlässigen Spiegels eine rotierende Spiegelblende 71. Ansonsten entspricht die Ausbildung der Vorrichtung gemäß Fig. 3b jedoch der Ausbildung der Vorrichtung gemäß Fig. 3a. Die rotierende Spiegelblende 71 besitzt in an sich bekannter Weise wenigstens ein reflektierendes Winkelsegment 73 und ein transparentes Winkelsegment 75, wobei das transparente Winkelsegment 75 an seiner dem Bildsensor 23 zugewandten Rückseite teildurchlässig verspiegelt ist. Daneben ist noch ein an sich bekannter optischer Sucher 77 gezeigt.

In der Ausführungsform gemäß Fig. 4 umfasst ein Bildsensor 23 einer digitalen Filmkamera einen Dateneingang 43, über welchen die Ausgangssignale der Sensorelemente voreinstellbar sind, d.h. über den Dateneingang 43 können vorbestimmte Signalwerte erzeugt werden. Die voreingestellten Ausgangssignale werden über einen Datenausgang 45, welcher dem Datenausgang eines herkömmlichen Bildsensors entspricht, ausgegeben. Damit ist es möglich, auf elektronischem Weg ein künstliches Bild zu erzeugen, in dem die Metadaten als Bildinformation vorliegen. Wird der Bildsensor 23 ausgelesen, werden die Metadaten in dem Datenstrom der digitalen Filmkamera übernommen. Zur Voreinstellung der Ausgangssignale der Sensorelemente des Bildsensors 23 ist ein nicht dargestellter Controller vorgesehen, welcher für die gesamte digitale Filmkamera zuständig ist.

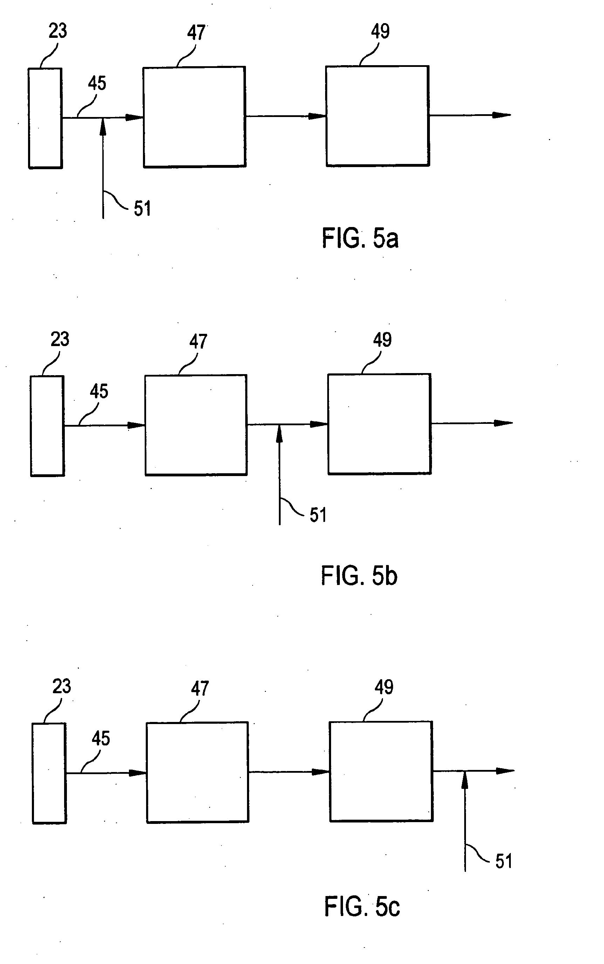

Bei der Ausführungsform gemäß Fig. 5 werden von einem nicht dargestellten Controller erzeugte Metadaten 51 nach Auslesen aus einem Bildsensor 23 einer digitalen Filmkamera bei der Bildverarbeitung in Bildinformationen umgewandelt. Die Metadaten 51 können dabei an verschiedenen Orten des Bildverarbeitungspfades in Bildinformationen umgewandelt werden. Gemäß Fig. 5a werden die Metadaten 51 unmittelbar nach dem Auslesen aus dem Bildsensor 23 dem Datenausgang 45 des Bildsensors 23 überlagert. Alternativ können die Ausgangssignale der entsprechenden Sensorelemente jedoch auch komplett ersetzt werden. Gemäß Fig. 5b werden die Metadaten 51 nach einem ersten Funktionsblock 47 in den Bildverarbeitungspfad eingespeist. Gemäß Fig. 5c werden die Metadaten 51 nach einem zweiten Funktionsblock 49 in den Bildverarbeitungspfad eingespeist. Bei dem Bildverarbeitungsblock 47 kann es sich beispielsweise um einen Funktionsblock zur Farbaufbereitung handeln. Bei dem Funktionsblock 49 kann es sich beispielsweise um einen Funktionsblock zum Umwandeln der einzelnen Bildpunkte des Bildsensors 23 in ein bestimmtes Datei- bzw. Bildformat zur Speicherung von Bildinformation handeln. Bevorzugt wird bei der Ausführungsform gemäß Fig. 5 dafür Sorge getragen, dass die von der Aufnahme eines Bildes durch den Bildsensor 23 bis zu der Einspeisung der Metadaten 51 in den Bildverarbeitungspfad zu dem entsprechenden Bild verstrichene Zeitdauer bei der Aufzeichnung der Uhrzeit berücksichtigt wird. Liegt beispielsweise im Bildsensor 23 das aktuelle Bild, in der Funktionseinheit 47 das letzte Bild und in der Funktionseinheit 49 das vorletzte Bild vor, wird im Fall von Fig. 5b bzw. 5c nicht die aktuelle Uhrzeit, sondern die Uhrzeit aufgezeichnet, als das letzte Bild bzw. vorletzte Bild noch im Bildsensor 23 vorlag.

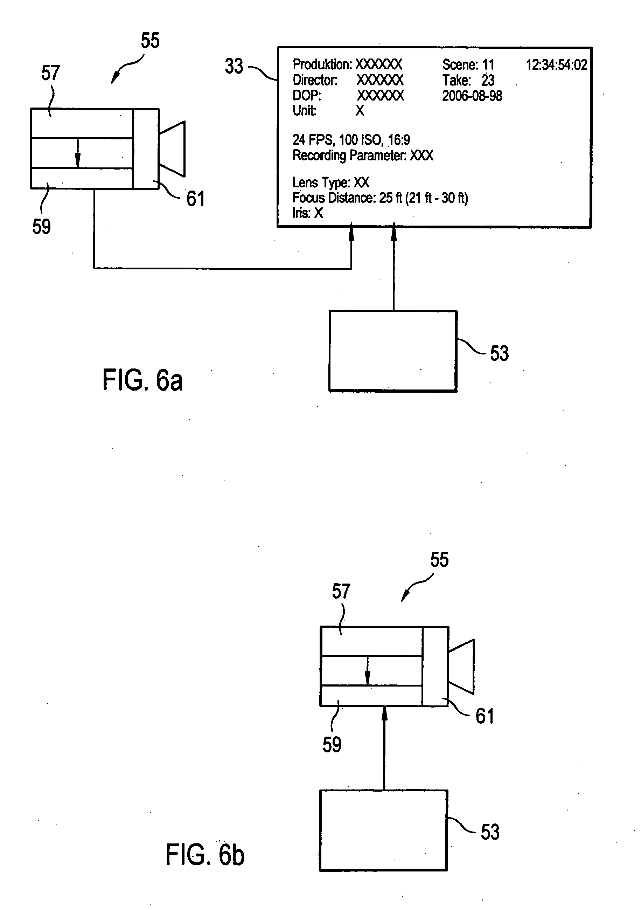

Zur Eingabe von Metadaten durch einen Benutzer ist eine Eingabeeinrichtung 53 vorgesehen, wie in Fig. 6 dargestellt ist. Hierbei handelt es sich um Metadaten, welche nicht die Filmkamera selbst, sondern die auf klassische Klappen geschriebene Metadaten, wie den Filmtitel, betreffen. Bei der Eingabeeinrichtung 53 kann es sich beispielsweise um einen PC, einen Laptop, einen PDA oder ein eigens dafür entwickeltes Gerät handeln. Die Übertragung der Metadaten von der Eingabeeinrichtung 53 an das Display 33 erfolgt über Kabel oder drahtlos. Darüber hinaus ist in Fig. 6 eine digitale Filmkamera 55 gezeigt, welche einen Controller 59 umfasst, welcher Metadaten an das Display 33 übermittelt. Bei den über den Controller 59 übermittelten Metadaten handelt es sich um Daten, welche über ein Bedienfeld 57 der Filmkamera 55 eingegeben wurden, wie die Bildfrequenz der Aufnahme, oder welche von der Filmkamera 55 selbst generiert wurden und beispielsweise Daten betreffend eine Linse 61 der Filmkamera 55 oder ebenfalls die Bildaufnahmefrequenz umfassen. Bei der Vorrichtung gemäß Fig. 6a ist das Display 33 außerhalb der Filmkamera 55 angeordnet, so dass die Metadaten des Controllers 59 über Kabel oder drahtlos an das Display 33 übermittelt werden. Bei der Vorrichtung gemäß Fig. 6b ist das Display entweder in die Filmkamera 55 integriert oder es ist überhaupt kein Display vorhanden. Die Eingabeeinrichtung 53 kann im Gegensatz zu der Darstellung in Fig. 6 auch fest mit dem Display 33 oder der Filmkamera 55 verbunden sein.

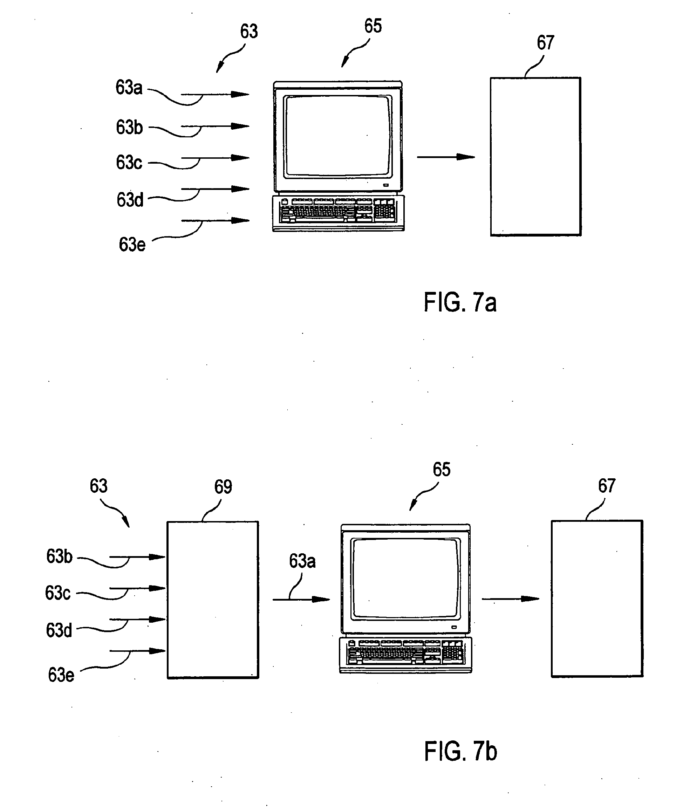

Zu einem beliebigen Zeitpunkt nach der Aufzeichnung der digitalen Bildinformation (Bilddaten und Metadaten) kann die Bildinformation mit den darin enthaltenen Metadaten an eine Leseeinheit 65, wie sie in Fig. 7 gezeigt ist, beispielsweise einen PC, übermittelt werden. Die Leseeinheit 65 ist dazu ausgelegt, aus den übermittelten Bildern zunächst diejenigen Bilder automatisch auszuwählen, in denen Metadaten enthalten sind. Aus den ausgewählten Bildern werden dann durch Bildmustererkennung (z.B. Optical Character Recognition, OCR) die Metadaten automatisch extrahiert und in eine Liste 67 ausgegeben. Die Leseeinheit 65 kann derart beschaffen sein, dass verschiedenste Bildformate verarbeitbar sind, beispielsweise HD-Video 63a, SD-Video 63b, Raw-Data 63c, eine Bilderfolge 63d oder ein sonstiges Format 63e (Fig. 7a). Die Leseeinheit 65 kann jedoch auch derart beschaffen sein, dass lediglich ein Standardeingang, zum Beispiel HD-Video 63a, vorhanden ist. In diesem Fall werden übermittelte Bilder, die ein anderes Format besitzen, zuvor durch einen Konverter 69 von dem jeweiligen Bildformat 63b, 63c, 63d, 63e in das Standardformat 63a gewandelt (Fig. 7b).

### Bezugszeichenliste:

- 11: Display
- 13: Schenkel
- 15: Schenkel
- 17: Eingangsbuchse
- 19: Eingangsbuchse
- 21: digitale Videokamera
- 23: Bildsensor
- 25: Kameraobjektiv
- 26: Aufnahmeobjektiv
- 27: Mattscheibe
- 29: Relaislinse
- 31: Adapter
- 33: Display
- 35: Abbildungsoptik
- 37: optische Achse
- 39: optische Achse
- 41: Strahlteiler
- 43: Dateneingang
- 45: Datenausgang
- 47: Funktionsblock
- 49: Funktionsblock
- 51: Metadaten
- 53: Eingabeeinrichtung
- 55: digitale Filmkamera
- 57: Bedienfeld
- 59: Controller
- 61: Linse
- 63: Bildformat
- 65: Leseeinheit
- 67: Liste
- 69: Konverter
- 71: rotierende Spiegelblende
- 73: reflektierendes Segment
- 75: transparentes Segment
- 77: optischer Sucher

## Patentansprüche

1. Vorrichtung zur Aufzeichnung von Bilddaten und Metadaten, welche Informationen über die Bilddaten - wie Aufzeichnungsparameter - enthalten, mit einer digitalen Filmkamera (21, 55), welche wenigstens einen Bildsensor (23) zur Erzeugung der Bilddaten umfasst, und mit Metadaten-Bilderzeugungsmitteln (11, 33, 59), durch welche die Metadaten in Form von vom menschlichen Auge erfassbarer Bildinformation aufzeichenbar sind, so dass die Bilddaten und die Metadaten als eine gemeinsame Bildinformation erzeugbar sind,
**dadurch gekennzeichnet,**
**dass** die Metadaten-Bilderzeugungsmittel (11, 33, 59) Anzeigemittel (11, 33) zur optischen Darstellung von Metadaten, insbesondere ein Display, umfassen.

2. Vorrichtung nach Anspruch 1,
**dadurch gekennzeichnet,**
**dass** die relative Lage und/oder Orientierung der Anzeigemittel (33) zu dem Bildsensor (23) festgelegt, insbesondere fixiert, ist.

3. Vorrichtung nach Anspruch 1, oder 2,
**dadurch gekennzeichnet,**
**dass** Spiegelmittel (27, 29, 35, 41) zur Einspiegelung der auf den Anzeigemitteln (33) dargestellten Metadaten auf den Bildsensor (23) vorgesehen sind.

4. Vorrichtung nach Anspruch 3,
**dadurch gekennzeichnet,**
**dass** zur Einspiegelung die Metadaten auf eine zwischen einem der digitalen Kamera (21, 55) zugeordneten Aufnahmeobjektiv (26) und dem Bildsensor (23) angeordnete Zwischenbildebene (27), insbesondere eine Mattscheibe, abbildbar sind.

5. Vorrichtung nach Anspruch 4,
**dadurch gekennzeichnet,**
**dass** zur Abbildung der Metadaten auf die Zwischenbildebene (27) eine Abbildungsoptik (35) vorgesehen ist, deren optische Achse (37) gegenüber der optischen Achse (39) der Filmkamera (21, 55) unter einem von Null und/oder 90° verschiedenen Winkel geneigt ist.

6. Vorrichtung nach Anspruch 5,
**dadurch gekennzeichnet,**
**dass** die aufgrund der zueinander geneigten optischen Achsen (37, 39) auftretende Verzerrung der Geometrie der auf die Zwischenbildebene (27) abgebildeten Metadaten gegenüber der Geometrie der auf den Anzeigemitteln (33) dargestellten Metadaten kompensierbar ist.

7. Vorrichtung nach zumindest einem der Ansprüche 3 bis 6,
**dadurch gekennzeichnet,**
**dass** zur Einspiegelung der Metadaten ein auf der optischen Achse (39) der Filmkamera (21, 55) angeordneter Strahlteiler (41), insbesondere ein teildurchlässiger Spiegel und/ oder eine rotierende Spiegelblende, vorgesehen ist.

8. Vorrichtung nach zumindest einem der vorhergehenden Ansprüche,
**dadurch gekennzeichnet,**
**dass** die Anzeigemittel (33) an ein Gehäuse für eine Zwischenbildebene (27), insbesondere für eine Mattscheibe, und/oder ein Gehäuse der Filmkamera (21, 55) koppelbar oder innerhalb des Gehäuses der Filmkamera (21, 55) angeordnet sind.

9. Vorrichtung zur Aufzeichnung von Bilddaten und Metadaten, welche Informationen über die Bilddaten - wie Aufzeichnungsparameter - enthalten, mit einer digitalen Filmkamera (21, 55), welche wenigstens einen Bildsensor (23) zur Erzeugung der Bilddaten umfasst, und mit Metadaten-Bilderzeugungsmitteln (11, 33, 59), durch welche die Metadaten in Form von vom menschlichen Auge erfassbarer Bildinformation aufzeichenbar sind, so dass die Bilddaten und die Metadaten als eine gemeinsame Bildinformation erzeugbar sind,
**dadurch gekennzeichnet,**
**dass** die Metadaten-Bilderzeugungsmittel (11, 33, 59) Datenverarbeitungsmittel (59) zur elektronischen Erzeugung der Metadaten innerhalb der Bilddaten, insbesondere einen Controller, umfassen.

10. Vorrichtung nach Anspruch 9,
**dadurch gekennzeichnet,**
**dass** der Bildsensor (23) Sensorelemente aufweist, deren Ausgangssignale durch die Datenverarbeitungsmittel (59) voreinstellbar sind.

11. Vorrichtung nach Anspruch 9 oder 10,
**dadurch gekennzeichnet,**
**dass** die von den Datenverarbeitungsmitteln (59) erzeugten Metadaten nach Auslesen aus dem Bildsensor (23) bei der Bildverarbeitung in Bildinformation umwandelbar sind.

12. Vorrichtung nach zumindest einem der vorhergehenden Ansprüche,
**dadurch gekennzeichnet,**
**dass** eine Eingabeeinrichtung (53) zur Eingabe von Metadaten durch einen Benutzer vorgesehen ist.

13. Vorrichtung nach zumindest einem der vorhergehenden Ansprüche,
**dadurch gekennzeichnet,**
**dass** die Metadaten von der Filmkamera (21, 55) selbst erzeugte Aufnahmeparameter und/oder vom Benutzer eingegebene Aufnahmeparameter umfassen.

14. Vorrichtung nach zumindest einem der vorhergehenden Ansprüche,
**dadurch gekennzeichnet,**
**dass** eingegebene und/oder von der Filmkamera (21, 55) erzeugte Daten an die Metadaten-Bilderzeugungsmittel (11, 33, 59) übermittelbar sind.

15. Vorrichtung zum Lesen von von einer digitalen Filmkamera (21, 55) übermittelten Metadaten, welche Informationen über Bilddaten - wie Aufzeichnungsparameter - enthalten und welche in Form von vom menschlichen Auge erfassbarer Bildinformation aufgezeichnet sind, so dass die Bilddaten und die Metadaten als eine gemeinsame Bildinformation vorliegen,
**dadurch gekennzeichnet,**
**dass** Mittel zur Bildmustererkennung (65) zur automatischen Extraktion der Metadaten aus der Bildinformation vorgesehen sind.

16. Vorrichtung nach Anspruch 15,
**dadurch gekennzeichnet,**
**dass** Auswahlmittel (65) zur automatischen Auswahl von Metadaten enthaltenden Bildern aus Bildinformation umfassenden Bildern vorgesehen sind.

17. Verfahren zur Aufzeichnung von Bilddaten und Metadaten, welche Informationen über die Bilddaten - wie Aufzeichnungsparameter - enthalten, mittels einer digitalen Filmkamera (21, 55), welche wenigstens einen Bildsensor (23) zur Erzeugung der Bilddaten umfasst, bei dem die Metadaten in Form von vom menschlichen Auge erfassbarer Bildinformation aufgezeichnet werden, so dass die Bilddaten und die Metadaten als eine gemeinsame Bildinformation erzeugt werden,
**dadurch gekennzeichnet,**
**dass** die Metadaten auf Anzeigemitteln (11, 33), insbesondere einem Display, optisch dargestellt werden.

18. Verfahren nach Anspruch 17,
**dadurch gekennzeichnet,**
**dass** die auf den Anzeigemitteln (11, 33) dargestellten Metadaten auf den Bildsensor (23) eingespiegelt werden.

19. Verfahren nach Anspruch 18,
**dadurch gekennzeichnet,**
**dass** zur Einspiegelung die Metadaten insbesondere unter einem von Null und/oder 90° verschiedenen Winkel gegenüber der optischen Achse (39) der Filmkamera (21, 55) auf eine zwischen einem Aufnahmeobjektiv (26) und dem Bildsensor (23) angeordnete Zwischenbildebene (27), insbesondere eine Mattscheibe, abgebildet werden.

20. Verfahren nach Anspruch 19,
**dadurch gekennzeichnet,**
**dass** die aufgrund der zueinander geneigten optischen Achsen (37, 39) auftretende Verzerrung der Geometrie der auf die Zwischenbildebene (27) abgebildeten Metadaten gegenüber der Geometrie der auf den Anzeigemitteln (33) dargestellten Metadaten kompensiert wird.

21. Verfahren zur Aufzeichnung von Bilddaten und Metadaten, welche Informationen über die Bilddaten - wie Aufzeichnungsparameter - enthalten, mittels einer digitalen Filmkamera (21, 55), welche wenigstens einen Bildsensor (23) zur Erzeugung der Bilddaten umfasst, bei dem die Metadaten in Form von vom menschlichen Auge erfassbarer Bildinformation aufgezeichnet werden, so dass die Bilddaten und die Metadaten als eine gemeinsame Bildinformation erzeugt werden,
**dadurch gekennzeichnet,**
**dass** die Metadaten durch Datenverarbeitungsmittel (59), insbesondere einen Controller, elektronisch erzeugt werden.

22. Verfahren nach Anspruch 21,
**dadurch gekennzeichnet,**
**dass** Ausgangssignale von Sensorelementen des Bildsensors (23) der Filmkamera (21, 55) durch die Datenverarbeitungsmittel (59) voreingestellt werden.

23. Verfahren nach Anspruch 21 oder 22,
**dadurch gekennzeichnet,**
**dass** die von den Datenverarbeitungsmitteln (59) erzeugten Metadaten nach Auslesen aus dem Bildsensor (23) bei der Bildverarbeitung in Bildinformation umwandelt werden.

24. Verfahren nach zumindest einem der Ansprüche 17 bis 23,
**dadurch gekennzeichnet,**
**dass** durch einen Benutzer Metadaten in eine Eingabeeinrichtung (53) eingegeben werden.

25. Verfahren nach zumindest einem der Ansprüche 17 bis 24,
**dadurch gekennzeichnet,**
**dass** durch die Filmkamera (21, 55) Aufnahmeparameter umfassende Metadaten erzeugt und/oder vom Benutzer Aufnahmeparameter umfassende Metadaten eingegeben werden.

26. Verfahren nach zumindest einem der Ansprüche 17 bis 25,
**dadurch gekennzeichnet,**
**dass** eingegebene und/oder von der Filmkamera (21, 55) erzeugte Metadaten an die Anzeigemittel (11, 33) und/oder die Datenverarbeitungsmittel (59) übermittelt werden.

27. Verfahren zum Lesen von von einer digitalen Filmkamera (21, 55) übermittelten Metadaten, welche Informationen über Bilddaten - wie Aufzeichnungsparameter - enthalten und welche in Form von vom menschlichen Auge erfassbarer Bildinformation aufgezeichnet sind, so dass die Bilddaten und die Metadaten als eine gemeinsame Bildinformation vorliegen,
**dadurch gekennzeichnet**,
zur Extraktion der Metadaten aus den Bilddaten Bildmuster automatisch erkannt werden.

28. Verfahren nach Anspruch 27,
**dadurch gekennzeichnet,**
**dass** vor der Extraktion Metadaten enthaltende Bilder aus Bilddaten umfassenden Bildern automatisch ausgewählt werden.
